# EUROPEAN PATENT APPLICATION

(11) **EP 1 466 865 A1**
(43) Date of publication of application: **13.10.2004**
(21) Application number: 03700557.6
(22) Date of filing: 14.01.2003
(51) Int. Cl.: C01B 25/12, C03C 14/00, C03C 10/00, H01M 10/36, H01B 1/06

(54) **METHOD FOR PRODUCING SULFIDE GLASS OR SULFIDE GLASS CERAMIC CAPABLE OF CONDUCING LITHIUM ION, AND WHOLE SOLID TYPE CELL USING SAID GLASS CERAMIC**

(30) Priority: 15.01.2002 JP 2002005855
(71) Applicant: IDEMITSU PETROCHEMICAL CO., LTD., Tokyo 130-0015 (JP); Akiba, Iwao, Tokuyama-shi, Yamaguchi 745-0843 (JP)
(72) Inventor: AKIBA, Iwao, Sumida-ku, Tokyo (JP); TATSUMISAGO, Masahiro, Sakai-shi, Osaka 599-8531 (JP)
(74) Representative: Prop, Gerrit
(86) International application number: PCT/JP2003/000210
(87) International publication number: WO 2003/059810

(57) **Abstract**

The present invention relates to a process for producing sulfide glass or sulfide glass ceramic each capable of conducting a lithium ion, comprising subjecting metallic lithium, sulfur as a simple substance and phosphorus as a simple substance as starting rawmaterials, which constitute the sulfide glass and sulfide glass ceramic, to mechanical milling to thereby convert them into sulfide glass or sulfide glass ceramic; and a whole solid type cell using the above-mentioned sulfide glass ceramic as a solid electrolyte.

According to the present invention, it is made possible to produce sulfide glass and sulfide glass ceramic which are each capable of conducting a lithium ion and which have high electroconductivity at room temperature by a simple and advantageous process from starting raw materials being easily available and inexpensive.

## Description

### TECHNICAL FIELD

The present invention relates to a method for producing sulfide glass or sulfide glass ceramic each capable of conducting a lithium ion; and to a whole solid type cell using the above-mentioned sulfide glass or sulfide glass ceramic as a solid electrolyte.

### BACKGROUND ART

It is publicly well known that sulfide glass and sulfide glass ceramic each capable of conducting a lithium ion are utilizable as a solid electrolyte for a whole solid type lithium secondary battery.

The aforesaid sulfide glass and sulfide glass ceramic are obtained by mixing SiS₂, phosphorus pentasulfide (P₂S₅), B₂S₃ and the like each as a glass formation agent with lithium sulfide (Li₂S) as a glass modification agent, heating and melting the resultant mixture and thereafter quenching the same {refer to Japanese Patent Application Laid-Open No. 283156 /1997 (Heisei 9)}.

In addition, the present inventors disclose that the aforestated sulfide glass and sulfide glass ceramic are obtained by subjecting sulfide crystals to mechanically milling at room temperature {refer to Japanese Patent Application Laid-Open No. 134937 /1999 (Heisei 11)}.

However, the sulfide such as SiS₂ , phosphorus pentasulfide (P₂S₅), B₂S₃ and the like each as a glass formation agent and lithium sulfide (Li₂S) as a glass modification agent, which are employed in the above-mentioned method, are scarcely produced in an industrial scale.

Japanese Patent Application Laid-Open No. 283156 /1997 (Heisei 9) proposes a process for the production of lithium sulfide which comprises reacting LiOH and hydrogen sulfide at a high temperature in the range of 130 to 445°C, and also a process for the production of SiS₂ which comprises adding powdery silicon to molten sulfur under stirring to disperse silicon in sulfur, and heating the resultant sulfur having dispersed powdery silicon inside a reactor at a reduced pressure.

Nevertheless any of the aforestated processes can hardly be said to be suitable as an industrial production process because of tedious troublesome reactional operation and handling of products as well as starting raw materials.

On the other hand, phosphorus pentasulfide is industrially produced by a process in which sulfur is heated to melt in a reactor and is gradually incorporated with white phosphorus and thereafter, the resultant mixture is distilled, cooled and crushed. However the above-mentioned process involves such problems that the product is the mixture of phosphorus tetrasulfide (P₄S₃) and phosphorus pentasulfide and that phosphorus pentasulfide absorbs moisture in air to generate hydrogen sulfide, therebycausing troublesomeness in handling and besides danger and the like problem.

In such circumstances, research and investigation were made by the present inventors on the processes for the production of sulfide glass and sulfide glass ceramic which were each capable of conducting a lithium ion, and which were producible from starting raw materials beingmore easily available and inexpensive.

In particular, Japanese Patent Application Laid-Open No. 134937 / 1999 (Heisei 11)} as cited hereinbefore discloses that lithium ion conductive sulfide glass is obtainable by using metallic lithium (Li) or lithium sulfide (Li₂S), silicon (Si) as a simple substance and sulfur (S) as a simple substance as starting raw materials, and subjecting the same to mechanical milling.

Nevertheless the sulfide glass just described involves such problems that a long time of mechanical milling is needed as compared with the case of lithium sulfide and SiS₂ being used as a starting raw material, and that the sulfide glass thus obtained has low electroconductivity.

Such being the case, further research and investigation were continued by the present inventors in order to produce sulfide glass and sulfide glass ceramic each having higher electroconductivity. As a result, it was discovered that sulfide glass and sulfide glass ceramic each composed of lithium sulfide and phosphorus pentasulfide as principal ingredients exhibited high lithium ion conductivity {refer to Japanese Patent Application Laid-Open No. 250580 /2001 (Heisei 13)}.

It was also discovered that the electroconductivity of the sulfide at room temperature is enhanced by subjecting the sulfide to a calcination at the glass transition temperature or higher, which sulfide being obtained by subjecting lithium sulfide and phosphorus pentasulfide to mechanical milling, (refer to Chemistry Letters 2001).

It was further discovered that sulfide glass having an electroconductivity in the order of 10⁻⁵ S / cm at room temperature is obtainable by a method in which phosphorus (P) and sulfur each as a simple substance that have been subjected to mechanical milling are incorporated with metallic lithium, and the resultant mixture is further subjected to mechanical milling (Tatsumisago et al: Collection of Lecture Abstracts on Spring General Meeting in 2001 of Japan Chemical Society, 2E341).

### DISCLOSURE OF THE INVENTION

As a result of intensive extensive research and investigation accumulated by the present inventors on the development of a production process being simple, convenient and easily available, it has been found that the sulfide which is obtained by subjecting the starting raw materials composed of metallic lithium or lithium sulfide, sulfur as a simple substance and phosphorus as a simple substance to mechanical milling is imparted with performances comparable to those of the sulfide ceramic which is obtained by subjecting the starting raw material composed of lithium sulfide and phosphorus pentasulfide to mechanical milling. Thus the present invention has been accomplished on the basis of the foregoing findings and information.

It was further discovered that the electroconductivity at room temperature of the sulfide as obtained according to the present invention is enhanced to 10⁻⁴ S / cm or higher by being once subjected to calcination at the glass transition temperature or higher as is the case with the sulfide formed from the starting raw material composed of lithium sulfide and phosphorus pentasulfide.

Specifically, the present invention is concerned with the following:
1. A process for producing sulfide glass or sulfide glass ceramic each capable of conducting a lithium ion, comprising subjecting metallic lithium, sulfur as a simple substance and phosphorus as a simple substance as starting raw materials, which constitute said sulfide glass and sulfide glass ceramic, to mechanical milling to thereby convert them into sulfide glass or sulfide glass ceramic.
2. The process for producing sulfide glass or sulfide glass ceramic each capable of conducting a lithium ion as set forth in the preceding item 1, wherein the simple element further comprises at least one element selected from the group consisting of metallic germanium, metallic aluminum, metallic iron, metallic zinc, silicon as a simple substance and boron as a simple substance.
3. The process for producing sulfide glass or sulfide glass ceramic each capable of conducting a lithium ion as set forth in the preceding item 1, wherein the metallic lithium is replaced in part or in whole with lithium sulfide.
4. The process for producing sulfide glass ceramic capable of conducting a lithium ion as set forth in the preceding item 1, wherein the sulfide glass which has been vitrified by the above-stated mechanical milling is calcined at the glass transition temperature thereof or higher.
5. The process for producing sulfide glass ceramic capable of conducting a lithium ion as set forth in the preceding item 4, wherein the above-stated sulfide glass is calcined at 150°C or higher.
6. The process for producing sulfide glass ceramic capable of conducting a lithium ion as set forth in the preceding item 4, wherein the above-stated sulfide glass is calcined under vacuum or in the presence of an inert gas.
7. The process for producing sulfide glass or sulfide glass ceramic each capable of conducting a lithium ion as set forth in the preceding item 1, wherein the decomposition voltage of any of the above-stated sulfide glass and sulfide glass ceramic is at least 3 V.
8. A whole solid type cell which comprises using, as a solid electrolyte, the sulfide glass or sulfide glass ceramic each being produced by the process as set forth in the preceding item 1.

### BRIEF DESCRIPTION OF DRAWING

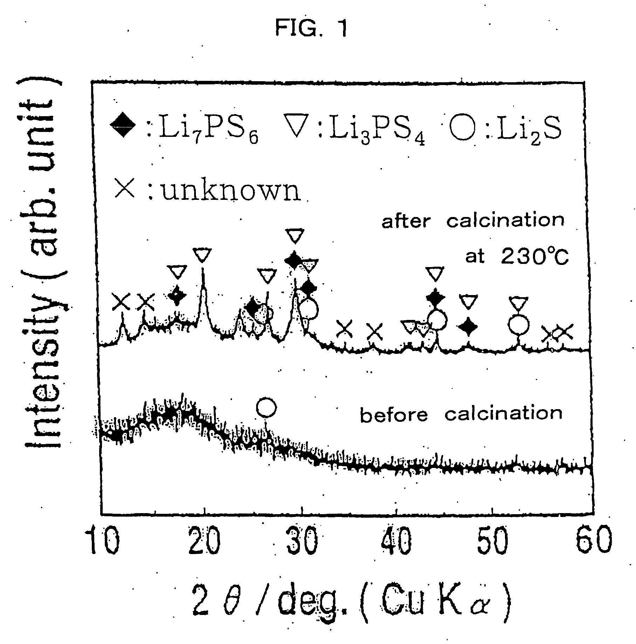

FIG. 1 is a graph illustrating X ray diffraction patterns of powdery samples before and after calcination.

### THE MOST PREFERRED EMBODIMENT TO CARRY OUT THE INVENTION

In the following, detailed description will be given of the present invention.

With regard to simple elements, there are usable metallic lithium, sulfur as a simple substance and phosphorus as a simple substance as starting raw materials. Metallic lithium, sulfur as a simple substance and phosphorus as a simple substance may be used without specific limitation provided that they are industrially produced and available on the market.

Concerning the sulfur as a simple substance, there is usable molten sulfur as such which is produced in a petroleum refinery or the like.

The metallic lithiummay be replaced in part or in whole with lithium sulfide.

The lithium sulfide may be that which is industrially available without specific limitation on the production process.

The blending ratios of the metallic lithium, sulfur as a simple substance and phosphorus as a simple substance are not specifically limited. Particularly preferably however, the ratio of metallic lithium to phosphorus is 1. 5 to 9.5 : 1, and the ratio of sulfur thereto is 3 to 7.5 : 1.

Likewise, the blending ratio of the lithium sulfide to be used in place of metallic lithium is not specifically limited. Particularly preferably however, the molar ratio of sulfur to the lithium sulfide is 0.5 to 3.5 : 1, and the molar ratio of the phosphorus thereto is 0.2 to 1.5 : 1.

In addition, also metallic germanium (Ge), metallic aluminum (Al), metallic iron (Fe), metallic zinc (Zn), silicon as a simple substance (Si) and boron as a simple substance (B) form amorphous or crystalline sulfide through mechanical milling with sulfur as a simple substance (Tatsumi sago et al: Collection of Lecture Abstracts on Spring General Meeting in 2001 of Japan Chemical Society, 2E341) and accordingly, part of the starting raw materials for the aforestated sulfide ceramic capable of conducting a lithium ion can be replaced with the above-cited species.

In the present invention, mechanical milling is applied for the purpose of converting the starting raw materials to glass and glass ceramic.

The mechanical milling is advantageous in that glass can be synthesized at around room temperature without causing thermal decomposition, thereby enabling to obtain the glass having the chemical composition same as that at the time of charging.

The mechanical milling further possesses such advantage that glass and glass ceramic can be pulverized simultaneously with the synthesis of the glass and glass ceramic.

The production process of the present invention can dispense with another crushing, cutting or grinding of the ion conductive sulfide glass or glass ceramic at the time of pulverization thereof.

The above-mentioned pulverized glass and glass ceramic is usable as a solid electrolyte, for instance, as such or by incorporating the same which is press molded in the form of pellet into a whole solid type cell. Thus according to the process of the present invention, it is made possible to simplify the production process for the ion conductive sulfide glass ceramic and besides, curtail the production cost.

Further according to the mechanical milling, it is made possible to form ion conductive pulverized sulfide glass ceramic having uniform particle size.

The use of the above-mentioned sulfide glass ceramic as a solid electrolyte can increase the contact interface between a positive electrode and a negative electrode and at the same time, enhance the adhesiveness therebetween.

The reaction is put into practice in an atmosphere of an inert gas such as nitrogen gas or argon gas.

The mechanical milling, to which a variety of systems are applicable, is particularly preferably carried out by using a planetary type ball mill.

The use of the planetary type ball mill enables extremely high impact energy to be efficiently generated, in which a pot rotates on its own axis, while a bedplate revolve around a stationary object.

There is no specific limitation on the rotational speed and rotation time for the mechanical milling, however the production rate of the sulfide glass increases with an increase in the rotational speed, while the conversion of the starting raw materials into the sulfide glass increases with an increase in the rotation time.

The electroconductivity at room temperature (25°C) of the sulfide glass obtained by mechanical milling is enhanced by calcinations at the glass transition temperature or higher, preferably at a temperature in the range of 150 to 500°C .

The form and shape of the sulfide glass ceramic to be subjected to the calcination are not specifically limited, but may be powdery as such or press molded into pellet.

Preferably, the calcination is put into practice in the presence of an inert gas such as nitrogen gas or argon gas or under vacuum.

There is no specific limitation on temperature raising and lowering rates and calcination time at the time of the calcination.

In what follows, the present invention will be described in more detail with reference to working examples, which however shall never limit the present invention thereto.

### Example 1

Crystalline lithium sulfide, sulfur as a simple substance and phosphorus as a simple substance were used as starting raw materials. Powders of them were weighed in a dry box filled with nitrogen at a molar ratio of 1 / 1.25 / 0.5, and were charged together with aluminum-made balls into an aluminum-made pot to be used in a planetary type ball mill.

The pot was hermetically sealed completely in a state of nitrogen gas being filled therein.

By attaching the pot to the planetary type ball mill, initial stage milling was carried out for several minutes at a low rotational speed (the rotational speed being 85 rpm) for the purpose of sufficiently mixing the starting raw materials.

Thereafter by gradually increasing the rotational speed, mechanical milling was performed at 370 rpm for 20 hours.

As the result of X-ray diffraction for powdery sample thus obtained, it was made certain that the peaks of lithium sulfide (Li₂S) andsulfurasasimplesubstance (S) completely disappeared, whereas vitrification thereof completely proceeded.

The powdery sample was molded into pellet under increased pressure of 3700 Kg / cm² in an atmosphere of an inert gas (nitrogen). Subsequently the resultant pellet as electrodes was coated with carbon paste to measure the electroconductivity thereof by means of AC two terminal method with a result that it was 2.3 × 10⁻⁵ S / cm at room temperature (25°C).

### Example 2

Metallic lithium in the form of small pieces, sulfur as a simple substance and phosphorus as a simple substance to be used as starting raw materials were weighed in a dry box filled in with nitrogen at a molar ratio of 4 / 4.5 / 1.

Subsequently mechanical milling was performed in the same manner as in Example 1 except that the rotational speed in initial stage was made lower than that in Example 1 because of the metallic lithium in the form of small pieces being used, and then by gradually increasing the rotational speed, mechanical milling was performed at 370 rpm for 40 hours.

As the result of X-ray diffraction for powdery sample thus obtained, it was made certain that the peak of sulfur as a simple substance (S) completely disappeared, whereas vitrification thereof completely proceeded. The powdery sample was molded into pellet under increased pressure.

Thus a measurement was made of the electroconductivity of the resultant sample in the same manner as in Example 1 with a result that it was 1.2 × 10⁻⁵ S / cm at room temperature (25°C).

Specifically it has been turned out that lithium ion conductive sulfide glass and sulfide glass ceramic are obtainable by the use of, as starting raw materials, unit elements (Li, S and P) which are easily available and which constitute lithium ion conductive sulfide glass and sulfide glass ceramic.

### Example 3

The powdery sample which had been obtained in Example 1 was subjected to calcination at 230°C in the presence of an inert gas (nitrogen).

After cooling the sample, a measurement was made of the electroconductivity of the resultant sample in the same manner as in Example 1. As a result it was an improved value of 4.1 × 10⁻⁴ S / cm at room temperature (25°C). The X-ray diffraction patterns for the powdery sample before and after the calcination are illustrated in FIG. 1. It was made certain therefrom that sulfide crystals such as Li₇PS₆ and Li₃PS₄ were formed by carrying out the calcination.

### Example 4

A whole solid type lithium secondary battery was prepared by using, as the solid electrolyte, the sulfide glass ceramic in the form of pellet which had been obtained in Example 3. By using lithium cobaltate exhibiting a potential of more than 4V as the positive electrode and metallic indium as the negative electrode, constant current discharge was carried out at a current density of 50 µA /cm² with a result that both charge and discharge were possible.

Moreover charge and discharge efficiencies were each 100%, thereby turning out that the battery exhibited excellent cycle characteristics.

### Comparative Example 1

Crystalline lithium sulfide, sulfur as a simple substance and silicon as a simple substance to be used as starting raw materials were weighed in a dry box filled in with nitrogen at a molar ratio of 1 / 1.33 / 0.67, and were charged together with aluminum-made balls into an aluminum-made pot to be used in a planetary type ball mill.

The pot was hermetically sealed completely in a state of nitrogen gas being filled therein. Subsequently, the procedure in Example 1 was repeated except that the mechanical milling was performed for 50 hours instead of 20 hours.

As the result of X-ray diffraction for powdery sample thus obtained, there were detected the peaks of lithium sulfide (Li₂S), sulfur as a simple substance (S) and silicon as a simple substance (Si).

The powdery sample was press molded into pellet, and the resultant pellet as electrodes was coated with carbon paste to measure the electroconductivity thereof by the method same as in Example 1. As a result it was an extremely low value of 3.2 × 10⁻⁶ S / cm at room temperature (25°C).

The cause for the low value is considered to be due to extremely low rate of reaction in this system leading to incomplete reaction.

### Comparative Example 2

Metallic lithium in the form of small pieces, sulfur as a simple substance and phosphorus as a simple substance were used as starting raw materials. Powders of them were weighed in a dry box filled in with nitrogen at a prescribed molar ratio. Subsequently mechanical milling was performed in the same manner as in Example 1 except that the rotational speed in initial stage was made lower than that in Example 1 because of the metallic lithium in small pieces being used, and then the number of rotations was gradually increased.

As the result of X-ray diffraction for powdery sample thus obtained, the peak of sulfur as a simple substance (S) was detected, thus proving extremely low rate of vitrification.

### INDUSTRIAL APPLICABILITY

According to the present invention, it is made possible to produce sulfide glass and sulfide glass ceramic which are each capable of conducting a lithium ion and which have high electroconductivity at room temperature by a simple and advantageous process by the use of starting raw materials that are easily available and inexpensive.

## Claims

1. A process for producing sulfide glass or sulfide glass ceramic each capable of conducting a lithium ion, comprising subjecting metallic lithium, sulfur as a simple substance and phosphorus as a simple substance as starting raw materials, which constitute said sulfide glass and sulfide glass ceramic, to mechanical milling to thereby convert them into sulfide glass or sulfide glass ceramic.

2. The process for producing sulfide glass or sulfide glass ceramic each capable of conducting a lithium ion according to Claim 1, wherein the simple element further comprises at least one element selected from the group consisting of metallic germanium, metallic aluminum, metallic iron, metallic zinc, silicon as a simple substance and boron as a simple substance.

3. The process for producing sulfide glass or sulfide glass ceramic each capable of conducting a lithium ion according to Claim 1, wherein the metallic lithium is replaced in part or in whole with lithium sulfide.

4. The process for producing sulfide glass ceramic capable of conducting a lithium ion according to Claim 1, wherein the sulfide glass which has been vitrified by the above-stated mechanical milling is calcined at the glass transition temperature thereof or higher.

5. The process for producing sulfide glass ceramic capable of conducting a lithium ion according to Claim 4, wherein the above-stated sulfide glass is calcined at 150°C or higher.

6. The process for producing sulfide glass ceramic capable of conducting a lithium ion according to Claim 4, wherein the above-stated sulfide glass is calcined under vacuum or in the presence of an inert gas.

7. The process for producing sulfide glass or sulfide glass ceramic each capable of conducting a lithium ion according to Claim 1, wherein the decomposition voltage of any of the above-stated sulfide glass and sulfide glass ceramic is at least 3 V.

8. A whole solid type cell which comprises using, as a solid electrolyte, the sulfide glass or sulfide glass ceramic each being produced by the process as set forth in Claim 1.
